# EUROPÄISCHE PATENTSCHRIFT

(11) **EP 2 002 524 B1**
(45) Veröffentlichungstag und Bekanntmachung des Hinweises auf die Patenterteilung: **25.07.2012**
(21) Anmeldenummer: 07723912.7
(22) Anmeldetag: 03.04.2007
(51) Int. Cl.: H02J 3/14, H02J 13/00, H02J 9/00

(54) **ENERGIEVERSORGUNGSVORRICHTUNG FÜR EINE VIELZAHL VON DARAN ANZUSCHLIESSENDEN ENERGIEVERBRAUCHERN**
ENERGY SUPPLY DEVICE FOR A PLURALITY OF ENERGY CONSUMERS CONNECTED THERETO
DISPOSITIF D'ALIMENTATION EN ENERGIE POUR UNE PLURALITE DE RECEPTEURS D'ENERGIE CONNECTES A CE DISPOSITIF

(30) Priorität: 04.04.2006 DE 102006016080
(43) Veröffentlichungstag der Anmeldung: 17.12.2008
(73) Patentinhaber: Küster Automotive Door Systems GmbH, 35630 Ehringshausen (DE); Grass GmbH, 6973 Höchst (AT)
(72) Erfinder: ZIPP, Jürgen, 35619 Braunfels (DE); KAMMER, Thomas, 35444 Biebertal (DE); MEDEBACH, Steffen, 35582 Wetzlar (DE)
(74) Vertreter: Müller, Eckhard
(86) Internationale Anmeldenummer: PCT/EP2007/002971
(87) Internationale Veröffentlichungsnummer: WO 2007/115733

(56) Entgegenhaltungen:
- US-A- 5 436 510
- US-A- 5 734 230
- US-A1- 2003 151 309
- US-A1- 2004 075 343

## Beschreibung

Die Erfindung betrifft eine Energieversorgungsvorrichtung für eine Vielzahl von daran anzuschließenden Energieverbrauchern mit einer vorbestimmten maximalen Leistungsabgabe.

### Stand der Technik

Solche Energieversörgungsvorrichtungen mit einer maximalen Leistungsabgabe sind in vielfältiger Art und Weise bekannt. Insbesondere ist aus der DE 699 06 299 T2 eine Vorrichtung zum Steuern mehrerer Schubladen bekannt. Mit dieser Vorrichtung können mittels einer Energieversorgungsvorrichtung eine Vielzahl von Schubladen in einem Möbelkorpus verfahren werden.

Da jede Energieversorgungsvorrichtung eine maximale Leistungsabgabe besitzt, muss die Energieversorgungsvorrichtung bei ihrer Planung entsprechend den anzuschließenden Verbrauchern dimensioniert werden. Sollen später weitere Energieverbraucher an die Energieversorgungsvorrichtung angeschlossen werden, besteht die Gefahr, dass im Betrieb die maximale Leistungsabgabe überschritten wird. Dies kann zu Beschädigungen der Energieversorgungsvorrichtung führen, wenn eine Vielzahl von Verbrauchern gleichzeitig mit Energie versorgt werden müssen.

In der US 2004/0075343 A1 wird eine Vorrichtung und ein Verfahren zur Steuerung der Abgabeleistung einer Energiequelle mit einer Steuerungsvorrichtung offenbart, die zwischen einer Verteilertafel und Energieversorgern zwischengeschaltete Lastkontrollschalter in Abhängigkeit von der Kapazität der Energiequelle und dem Stromverbrauch steuert.

Die US 2003/0151309 A1 offenbart eine Vorrichtung zur Energieverteilung in einer Überlastsituation eines Versorgungssystems eines Flughafens, das auf der Basis einer bekannten maximalen Abgabeleistung einer Leitung abhängig von dem Zustand beispielsweise einer Verbindungsbrücke zu einem Flugzeug eine Energieverteilung vornimmt, um die Leitung nicht zu überlasten. Die US5336510 offenbart ein system zur Verwaltung des Energieverbraverbravehs für eine Vielzahl von Verbrduchern. Eine Stenerungsvorrichtung verbindert das Übersuchräten einer Gesamtenergiemenge, die durch Tarifinformationen bestimmt ist.

### Aufgabenstellung

Aufgabe der Erfindung ist es daher, eine Energieversorgungsvorrichtung mit den Merkmalen des Oberbegriffs des Anspruchs 1 derart weiterzubilden, dass ohne Veränderungen an der Energieversorgungsvorrichtung eine möglichst große Flexibilität hinsichtlich der zu versorgenden Objekte besteht.

### Erfindung und vorteilhafte Wirkungen

Gelöst wird diese Aufgabe durch eine Energieversorgungsvorrichtung mit den Merkmalen des Anspruchs 1. Vorteilhafte Ausgestaltungen der Erfindung finden sich in den Unteransprüchen.

Dadurch, dass eine Überwachungseinrichtung für die Abgabeleistung der Energieversorgungsvorrichtung vorgesehen ist, welche ein Überschreiten der maximalen Abgabeleistung der Energieversorgungsvorrichtung verhindert, ist sichergestellt, dass ein Überlastbetrieb der Energieversorgungsvorrichtung nicht stattfinden kann. Beschädigungen der Energieversorgungsvorrichtung durch Überbelastungen sind dadurch wirkungsvoll vorgebeugt.

Weiterhin ist es vorgesehen, dass die Energieversorgungsvorrichtung zum nachträglichen Anschließen von weiteren Verbrauchern ausgebildet ist. Durch diese Maßnahme können in ein vorhandenes System, beispielsweise in einer Gebäudeeinrichtung oder in einem Möbel mit mehreren Energieverbrauchern, weitere Energieverbraucher angeschlossen werden, ohne dass parallel zur bestehenden Energieversorgungsvorrichtung eine weitere Energieversorgungsvorrichtung installiert werden muss.

Erfindungsgemäße Energieversorgungsvorrichtungen können beispielsweise in modulare Möbeln oder auch Gebäudeeinrichtungen eingesetzt werden. Solche Möbel oder Gebäudeeinrichtungen können nach der Fertigstellung noch mit weiteren Energieverbrauchern versehen werden, ohne dass die maximale Leistungsabgabe im Betrieb der Energieversorgungsvorrichtüng überschritten wird.

Nach einer ersten vorteilhaften Ausgestaltung der Erfindung ist die Energieversorgungsvorrichtung eine elektrische Stromversorgungseinrichtung. Eine solche elektrische Stromversorgungseinrichtung als Energieversorgungsvorrichtung bietet sich deshalb an, da heutzutage nahezu alle Energieverbraucher in Gebäudeeinrichtungen bzw. privaten Haushalten oder auch Möbel mit elektrischer Energie betrieben werden.

Nach einer besonderes vorteilhaften Ausgestaltung der Erfindung ist es vorgesehen, dass die Überwachungseinrichtung dazu ausgebildet ist, das Zuschalten eines Verbrauchers zu unterbinden, wenn dadurch die maximale Leistungsabgabe bzw. ein zuvor definierter Grenzwert für die Leistungsabgabe überschritten würde. Durch diese Maßnahme ist ein sicherer Überlastungsschutz für die Energieversorgungsvorrichtung gewährleistet. Die Energieversorgungsvorrichtung wird zu keinem Zeitpunkt mehr Energie abgeben, als die maximale Leistungsabgabe bzw. als den zuvor definierten Grenzwert für die Leistungsabgabe.

Nach einer weiteren vorteilhaften Ausgestaltung der Erfindung ist den an die Energieversorgungsvorrichtung angeschlossenen Energieverbrauchern eine Priorität zugeordnet, wobei die Überwachungseinrichtung zur Abschaltung wenigstens eines Energieverbrauchers mit niedriger Priorität ausgebildet ist, wenn durch Einschalten eines weiteren Energieverbrauchers die maximale Leistungsabgabe bzw. ein zuvor definierter Grenzwert für die Leistungsabgabe überschritten wird. Durch diese Maßnahme ist sichergestellt, dass Energieverbraucher, die auf die kontinuierliche Energiezufuhr angewiesen sind, mit hoher Priorität eingestuft werden und deshalb bei Einschalten eines Verbrauchers mit niedrigerer Priorität zu keinem Zeitpunkt abgeschaltet werden. Umgekehrt werden Verbraucher mit niedriger Priorität ausgeschaltet, wenn ein weiterer Verbraucher mit höherer Priorität eingeschaltet wird.

Vorteilhafterweise ist es vorgesehen, dass die Überwachungseinrichtung nach Ausschalten des zuvor eingeschalteten weiteren Energieverbrauchers zum Einschalten des wenigstens einen zuvor ausgeschalteten Energieverbrauchers ausgebildet ist. Durch diese Maßnahme wird der gleiche Zustand wiederhergestellt, der vor dem Einschalten des weiteren Energieverbrauchers dem System geherrscht hat.

Nach einer anderen Ausgestaltung der Erfindung ist eine Mikrocontrollersteuerung vorgesehen, welche die Überwachungseinrichtung zur Kontrolle und Steuerung der Leistungsabgabe an die angeschlossenen Verbraucher enthält. Durch eine solche Mikrocontrollersteuerung kann die Überwachungseinrichtung in die Energieversorgungsvorrichtung integriert werden. Weiterhin sind solche Mikrocontrollersteuerungen mittlerweile als Massenware auch kostengünstig herzustellen und können durch entsprechende Programmierung optimal an bestehende Systeme angepasst werden.

Dabei hat es sich als vorteilhaft erwiesen, dass die Mikrocontrollersteuerung über einen Datenbus mit allen angeschlossenen Verbrauchern verbunden ist. Durch einen solchen Datenbus ist eine einfache Kommunikation zwischen der Mikrocontrollersteuerung und den angeschlossenen Verbrauchern ermöglicht. Vorteilhaft hierbei ist auch, dass solche Datenbusse in vielen Systemen, beispielsweise Gebäudeeinrichtungen oder Möbeln bereits integriert sind und nicht separat installiert werden müssen. Ein einfaches Anschließen an das bereits bestehende Bussystem ist hierfür vollkommen ausreichend.

Weiterhin hat es sich als vorteilhaft herausgestellt, die Mikrocontrollersteuerung als Master-Einheit und die angeschlossenen Verbraucher als Slave-Einheit einer Master-Slave-Anordnung auszubilden. Durch diese Ausgestaltung ist gewährleistet, dass die Mikrocontrollersteuerung als Master-Einheit die angeschlossenen Verbraucher ansteuert und diese die ihnen zugewiesenen Aufgaben abarbeiten. Die Mikrocontrollersteuerung braucht sich deshalb nicht mit den einzelnen von den angeschlossenen Verbrauchern durchzuführenden Arbeiten zu beschäftigen, sondern weist die Verbraucher als Slave-Einheit nur an, diese Arbeiten selbständig auszuführen.

Nach einer weiteren Ausgestaltung der Erfindung ist die Überwachungseinrichtung zum Abschalten aller angeschlossenen Verbraucher ausgebildet, wenn eine Überlastung der Energieversorgungsvorrichtung, beispielsweise infolge eines Kurzschlusses, festgestellt wird. Durch diese Maßnahme ist erreicht, dass keine weiteren Beschädigungen des Gesamtsystems auftreten, da nach Abschalten aller angeschlossenen Verbraucher keine Energieabnahme mehr stattfindet.

Weiterhin kann es vorgesehen sein, dass die Überwachungseinrichtung bzw. die Mikrocontrollersteuerung mit einer aktivierbaren und deaktivierbaren Energiespareinrichtung versehen ist, durch welche die angeschlossenen Verbraucher in einem Zustand minimalen Energieverbrauchs versetzt werden. Dadurch ist es ermöglicht, dass die angeschlossenen Verbraucher bei minimalem Energieverbrauch sofort aktiviert werden können, wenn die Energiespareinrichtung sich in aktiviertem Modus befindet.

Dabei hat es sich als vorteilhaft erwiesen, dass die Überwachungseinrichtung bzw. die Mikrocontrollersteuerung mit einer Zeitschalteinrichtung versehen ist, durch welche die Energiespareinrichtung aktivierbar und deaktivierbar ist. Durch diese Maßnahme ist es ermöglicht, den Energieverbrauch des Gesamtsystems zu minimieren, in dem die Energiespareinrichtung durch die Zeitschalteinrichtung aktiviert wird, wenn zu über einen vorgegebenen Zeitraum die Energieabgabe unter einen bestimmten Grenzwert gefallen ist.

Weiterhin hat es sich als vorteilhaft erwiesen, die Überwachungseinrichtung bzw. die Mikrocontrollersteuerung mit einer Temperaturmesseinrichtung zu versehen, durch welche die Energieabgabe an die angeschlossenen Verbraucher bei Überschreiten einer internen Grenztemperatur gedrosselt bzw. abgeschaltet wird. Durch diese Maßnahme ist es gewährleistet, dass das Gesamtsystem bzw. einzelne Endverbraucher durch Überhitzung nicht beschädigt werden.

Nach einem weiteren Gedanken der Erfindung ist es vorgesehen, dass eine Schnittstelle zum Anschluss an ein bereits bestehendes Netzwerk, insbesondere ein Hausgerätenetzwerk, bevorzugt mit einem CHAIN-Bus, vorgesehen ist. Dadurch ist es ermöglicht, dass die erfindungsgemäße Energieversorgungsvorrichtung an ein bereits bestehendes System angeschlossen werden kann, ohne dass weitere Installationsarbeiten nötig sind.

Nach einem eigenständigen Gedanken der Erfindung ist ein Bussystem vorgesehen, welches wenigstens einen Leistungsbus zum Anschließen einer Vielzahl von Energieverbrauchern an eine Energieversorgungsvorrichtung und wenigstens einen Datenbus aufweist, welcher zum Kommunizieren zwischen einer Steuereinrichtung und den angeschlossenen Energieverbrauchern dient, um die Leistungsabgabe der Energieversorgungsvorrichtung an die Energieverbraucher zu kontrollieren und zu steuern. Durch diese Maßnahme ist die Voraussetzung geschaffen, dass die Abgabeleistung der Energieversorgungsvorrichtung schnell und auf einfache technische Art und Weise überwacht werden kann, um beispielsweise eine Beschädigung der Energieversorgungsvorrichtung durch Überlastung zu vermeiden.

Dabei kann es vorgesehen sein, dass das Bussystem eine Schnittstelle zum Anschluss an ein bereits bestehendes Netzwerk, insbesondere ein Hausgerätenetzwerk, bevorzugt mit einem CHAIN-Bus aufweist. Dadurch ist ein Ankoppeln des Bussystemes an ein bestehendes Netzwerk-System ohne großen Installationsaufwand möglich.

Weiterhin hat es sich als vorteilhaft erwiesen, ein Möbel bzw. eine Gebäudeeinrichtung oder ein Gebäude mit wenigstens einer zuvor beschriebenen erfindungsgemäßen Energieversorgungsvorrichtung und gegebenenfalls einem erfindungsgemäßen Bussystem zu versehen.

Nach einem weiteren Gedanken der Erfindung ist die Verwendung eines Bussystems zur Anwendung einer Vielzahl von Energieverbrauchern, vorzugsweise eines Möbels oder einer Gebäudeeinrichtung, an eine Energieversorgungsvorrichtung sowie zum Kontrollieren und Steuern der Leistungsabgabe an die Energieverbraucher.

### Ausführungsbeispiele

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden sämtliche beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: ein Möbel mit vier Schubladen und einem Ausführungsbeispiel einer erfindungsgemäßen Energieversorgungsvorrichtung,
- Figur 2: ein Möbel mit vier Schubladen und einem anderen Ausführungsbeispiel einer erfindungsgemäßen Energieversorgungsvorrichtung,
- Figur 3: ein weiteres Möbel mit vier Schubladen und einem weiteren Ausführungsbeispiel einer erfindungsgemäßen Energieversorgungsvorrichtung und
- Figur 4: ein Möbel mit vier Schubladen und einem weiteren Ausführungsbeispiel einer erfindungsgemäßen Energieversorgungsvorrichtung.

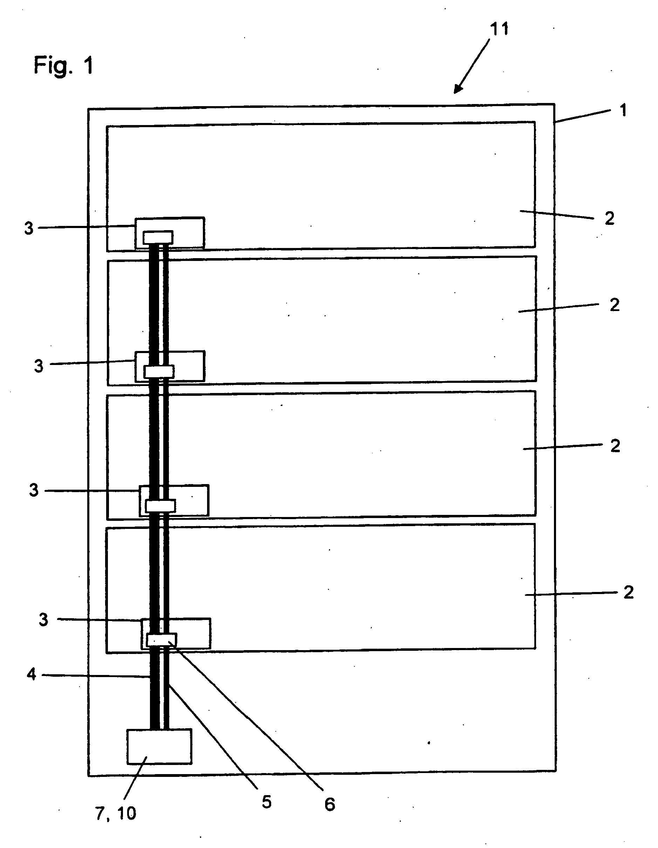

Figur 1 zeigt ein Möbel 11 mit vier in dem Möbelkorpus 1 verschiebbar gelagerten Schubladen 2. Jede Schublade 2 ist mit einem Antrieb 3 versehen. Die Antriebe 3 sind über einen Leistungsbus 4 und über einen Datenbus 6 miteinander und mit einer Steuereinrichtung 7 der als Energieversorgungsvorrichtung dienenden Stromversorgung 10 verbunden. Der Datenbus 6 und der Leistungsbus 4 bilden dabei vorzugsweise ein Bussystem für die Möbel 11.

In dem Ausführungsbeispiel gemäß Figur 1 sind der Leistungsbus 4 und der Datenbus 5 mittels gemeinsamer Steckverbinder 6 mit den Antrieben 3 der Schubladen 2 verbunden. Die Stromversorgung 10 ist hierbei als eine Gleichstrom-Niedervolt-Stromversorgung mit 24 Volt ausgebildet. Neben den Verbrauchern in Form der Antriebe 3 können auch noch weitere Verbraucher angeschlossen sein. Dies können beispielsweise hier nicht dargestellte Beleuchtungen für die Schubladen oder auch Warmhalteplatten in den Schubladen sein. Geht man nun von einer Abgabeleistung von 750 Watt in der Gleichstrom-Niedervolt-Stromversorgung aus und nimmt an, dass die Beleuchtung einiger geöffneter Schubladen 200 Watt und eine Warmhalteplatte in einer weiteren Schublade 500 Watt benötigt, bleibt eine Reserve von 50 Watt für weitere Verbraucher. Soll nun eine weitere Schublade geöffnet werden, wozu eine Leistung von 100 Watt benötigt wird, würde die maximale Abgabeleistung von 750 Watt um 50 Watt überschritten. Damit wäre die Stromversorgung überlastet. Damit dies nicht geschieht, ist die Steuerung 7 mit einer Überwachungseinheit für die Abgabeleistung versehen. Die Überwachungseinheit kann in einem solchen Fall beispielsweise entscheiden, dass die Schublade nicht geöffnet werden darf, kann aber auch dafür sorgen, dass beispielsweise die Warmhalteplatte kurzfristig abgeschaltet wird, so dass wieder genügend Leistung zum Öffnen der weiteren Schublade zur Verfügung steht. Da das Öffnen der Schublade nicht länger als 2 Sekunden dauert, kann die Warmhalteplatte nach dem Öffnen wieder eingeschaltet werden, ohne dass sie in dieser kurzen Zeit merklich abgekühlt ist.

Damit die Überwachungseinheit solche Entscheidungen treffen kann, werden die einzelnen Verbraucher, wie beispielsweise die Antriebe 3 und die Warmhalteplatten mit unterschiedlichen Prioritäten versehen. Die Überwachungseinheit entscheidet dann anhand der Priorität, welche Verbraucher kurzfristig oder ganz ausgeschaltet werden können.

Über das Bussystem werden durch Abarbeiten einer Installationsroutine, welche beispielsweise nach Auftreten einer Fehlfunktion oder Ausschalten des Systems, vorzugsweise selbsttätig, gestartet wird, sämtliche angeschlossenen Verbraucher codiert. Erst danach ist ein ordnungsgemäßes Ansteuern der einzelnen Verbraucher möglich.

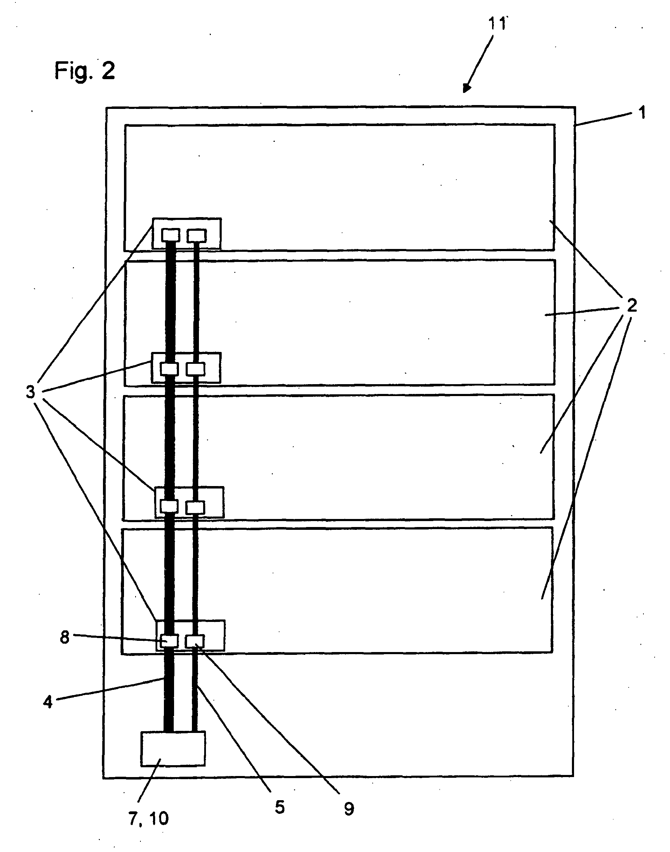

Ein weiteres Ausführungsbeispiel der Erfindung ist in Figur 2 dargestellt. Dieses unterscheidet sich von dem der Figur 1 dadurch, dass für den Leistungsbus 4 und den Datenbus 5 separate Steckverbinder 8, 9 zum Anschluss an die Antriebe 3 bzw. andere Verbraucher vorgesehen sind. Die Funktionsweise der dort dargestellten Vorrichtung entspricht der Vorrichtung gemäß Figur 1. Diese wurde bereits oben beschrieben.

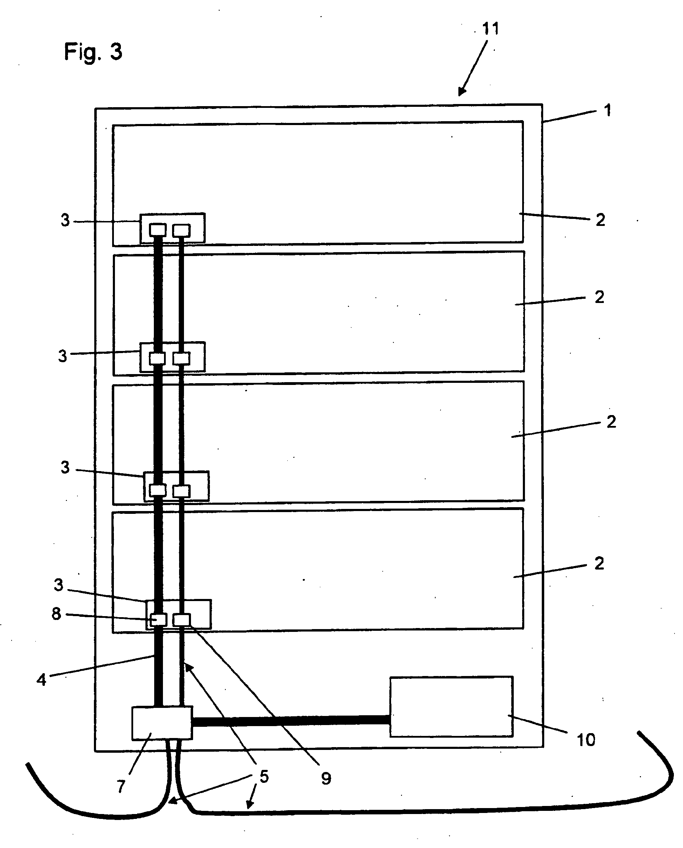

In dem Ausführungsbeispiel gemäß Figur 3 ist die die Überwachungseinheit enthaltende Steuerung 7 nicht in die Stromversorgung 10 integriert. Dafür können an den Leistungsbus 4 und an den Datenbus 5 weitere Verbraucher angeschlossen werden. Dies können ebenfalls Möbel mit verschiebbaren Schubladen sein. Allerdings können auch verschiedenste andere Verbraucher einer Verbraucherkette, beispielsweise in einer Küche, daran angeschlossen werden. Dabei können die einzelnen Elemente, beispielsweise wie das in Figur 3 dargestellte Möbel 11 mit einem Korpus 1 und darin verschiebbar gelagerten Schubladen 2, mit einer separaten Stromversorgung 10 ausgebildet sein. Es ist allerdings auch denkbar, dass alle angeschlossenen Elemente über eine einzige Stromversorgung 10 mit elektrischem Strom versorgt werden.

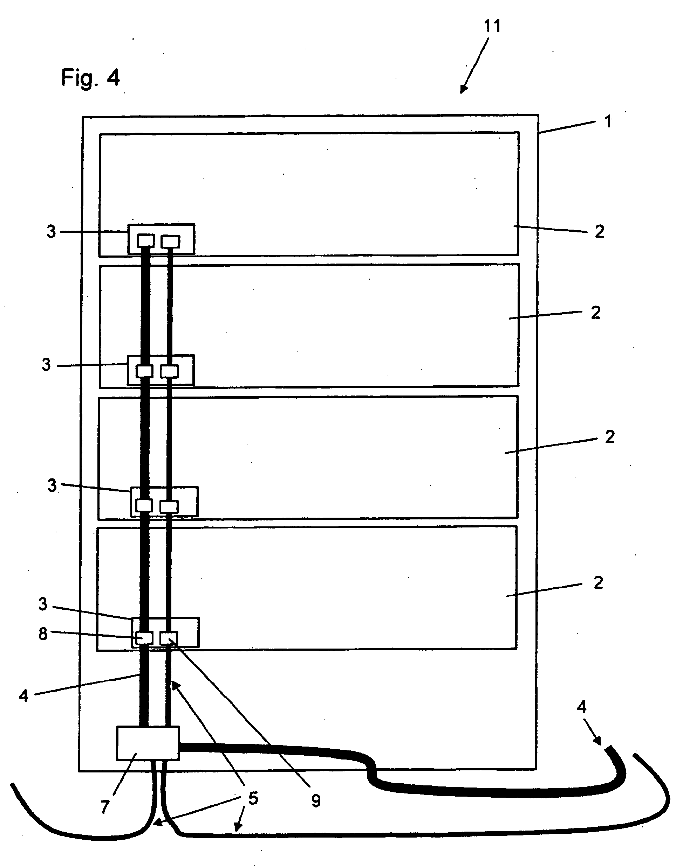

Das in Figur 4 dargestellte Ausführungsbeispiel weist im Gegensatz zu den zuvor beschriebenen Ausführungsbeispielen keine interne Stromversorgung 10, sondern eine nicht dargestellte externe Stromversorgung auf. Diese externe Stromversorgung ist mit den Verbrauchern 3 über einen Leistungsbus 4 mit der Steuereinrichtung 7 und der Leistungsbus 4 über Steckverbindern 8 mit den einzelnen Verbrauchern verbunden.

Die Funktionsweise der Ausführungsbeispiele gemäß den Figuren 3 und 4 entspricht der des in Figur 1 beschriebenen Ausführungsbeispiels.

Für alle zuvor beschriebenen Ausführungsbeispiele ist es natürlich möglich, dass die angeschlossenen Verbraucher, wie beispielsweise die Antriebe 3 mit einer separaten Steuerung versehen sind. In diesem Fall kann die zentrale Steuerung 7 als Master-Einheit und die Steuerungen der Verbraucher als Slave-Einheit einer Master/Slave-Anordnung betrieben werden. In diesem Fall übernimmt die zentrale Steuerung 7 im Wesentlichen die Ansteuerung der einzelnen Verbraucher, während die Steuerung der einzelnen Verbraucher 3 deren Funktion steuern und überwachen.

Dabei kann es natürlich vorgesehen sein, dass bei Ausfall der zentralen Steuerung 7 die Slave-Einheiten der Verbraucher 3 deren Aufgaben mit übernehmen, so dass eine Redundanz im System geschaffen ist.

Weiterhin können die in den Figuren dargestellten Schubladen 2 weitere Verbraucher, beispielsweise Leuchtmittel aufweisen beziehungsweise daran angeordnet sein. Vorteilhafterweise sind diese weiteren Verbraucher ebenfalls über eine Steckverbindungen an den Leistungsbus 4 und den Datenbus 5 anschließbar.

### Bezugszeichenliste

- 1: Korpus
- 2: Schublade
- 3: Antrieb inklusive Steuerung
- 4: Leistungsbus
- 5: Datenbus
- 6: gemeinsamer Steckverbinder
- 7: Steuerung
- 8: Steckverbinder Leistungsbus
- 9: Steckverbinder Datenbus
- 10: Stromversorgung
- 11: Möbel

## Patentansprüche

1. Energieversorgungsvorrichtung (10) für eine Vielzahl von daran anzuschließenden Energieverbrauchern (3), wobei die Energieversorgungseinrichtung (10) eine vorbestimmte maximale Leistungsabgabe aufweist, wobei eine Überwachungseinrichtung für die Abgabeleistung vorgesehen ist, die ein Überschreiten der maximalen Abgabeleistung der Energieversorgungsvorrichtung (10) verhindert, wobei die Energieversorgungsvorrichtung (10) zum nachträglichen Anschließen von weiteren Verbrauchern ausgebildet ist.

2. Vorrichtung nach Anspruch 1, **dadurch gekennzeichnet, dass** die Energieversorgungsvorrichtung eine elektrische Stromversorgungseinrichtung (10) ist.

3. Vorrichtung nach einem der vorhergehenden Ansprüche,
**dadurch gekennzeichnet, dass** die Überwachungseinrichtung dazu ausgebildet ist, das Zuschalten eines Verbrauchers zu unterbinden, wenn dadurch die maximale Leistungsabgabe beziehungsweise ein zuvor definierter Grenzwert für die Leistungsabgabe überschritten würde.

4. Vorrichtung nach einem der vorhergehenden Ansprüche,
**dadurch gekennzeichnet, dass** den an die Energieversorgungsvorrichtung (10) anzuschließenden Energieverbrauchern (3) eine Priorität zugeordnet ist, wobei die Überwachungseinrichtung zum Abschalten wenigstens eines Energieverbrauchers mit niedriger Priorität ausgebildet ist, wenn durch Einschalten eines weiteren Energieverbrauchers die maximale Leistungsabgabe beziehungsweise ein zuvor definierter Grenzwert für die Leistungsabgabe überschritten wird.

5. Vorrichtung nach Anspruch 3, **dadurch gekennzeichnet, dass** die Übecwachungseinrichtung nach Ausschalten des weiteren Energieverbrauchers zum Einschalten des wenigstens einen zuvor ausgeschalteten Energieverbrauchers ausgebildet ist.

6. Vorrichtung nach einem der vorhergehenden Ansprüche,
**dadurch gekennzeichnet, dass** eine Microcontrollersteuerung (7) vorgesehen ist, die die Überwachungseinrichtung zur Kontrolle und Steuerung der Leistungsabgabe an die angeschlossenen Verbraucher (3) enthält.

7. Vorrichtung nach Anspruch 5, **dadurch gekennzeichnet, dass** die Microcontrollersteuerung (7) über einen Datenbus (5) mit allen angeschlossenen Verbrauchern (3) verbunden ist.

8. Vorrichtung nach Anspruch 6 oder 7, **dadurch gekennzeichnet, dass** die Microcontrollersteuerung (7) als Master-Einheit und die angeschlossenen Verbraucher (3) als Slave-Einheit einer Master/Slave-Anordnung ausgebildet sind.

9. Vorrichtung nach einem der vorhergehenden Ansprüche, **dadurch gekennzeichnet, dass** die Überwachungseinrichtung zum Abschalten aller angeschlossenen Verbraucher (3) ausgebildet ist, wenn eine Überlastung der Energieversorgungsvorrichtung (10), beispielsweise in Folge eines Kurzschlusses, festgestellt wird.

10. Vorrichtung nach einem der vorhergehenden Ansprüche, **dadurch gekennzeichnet, dass** die Überwachungseinrichtung beziehungsweise die Microcontrollersteuerung (7) mit einer aktivierbaren und deaktivierbaren Energiespareinrichtung versehen ist, durch welche die angeschlossenen Verbraucher (3) in einen Zustand minimalen Energieverbrauchs versetz werden.

11. Vorrichtung nach Anspruch 10, **dadurch gekennzeichnet, dass** die Überwachungseinrichtung beziehungsweise die Microcontrollersteuerung (7) mit einer Zeitschalteinrichtung versehen ist, durch welche die Energiespareinrichtung aktivierbar und deaktivierbar ist.

12. Vorrichtung nach einem der vorhergehenden Ansprüche, **dadurch gekennzeichnet, dass** die Überwachungseinrichtung beziehungsweise die Microcontrollersteuerung (7) mit einer Temperaturmesseinrichtung versehen ist, durch welche die Energieabgabe an die angeschlossenen Verbraucher bei Überschreiten eine internen Grenztemperatur gedrosselt beziehungsweise abgeschaltet wird.

13. Vorrichtung nach einem der vorhergehenden Ansprüche,
**dadurch gekennzeichnet, dass** eine Schnittstelle zum Anschluss an ein bereits bestehendes Netzwerk, insbesondere ein Hausgerätenetzwerk, bevorzugt mit einem CHAIN-Bus, vorgesehen ist.

14. Bussystem mit wenigstens einem Leistungsbus (4) zum Anschließen einer Vielzahl von Energieverbrauchern (3) an eine Energieversorgungsvorrichtung (10) nach einem der Ansprüche 1 bis 13 und mit wenigstens einem Datenbus (5), welcher zum Kommunizieren zwischen einer Steuereinrichtung (7) und den angeschlossenen Energieverbrauchern (3) dient, um die Leistungsabgabe der Energieversorgungsvorrichtung (10) an die Energieverbraucher (3) zu kontrollieren und zu steuern.

15. Bussystem nach Anspruch 14, **dadurch gekennzeichnet, dass** eine Schnittstelle zum Anschluss an ein bereits bestehendes Netzwerk, insbesondere ein Hausgerätenetzwerk, bevorzugt mit einem CHAIN-Bus, vorgesehen ist.

16. Möbel mit einer Energieversorgungsvorrichtung nach einem der Ansprüche 1 bis 13 und/oder einem Bussystem nach Anspruch 14 oder 15.

17. Gebäudeeinrichtung mit wenigstens einer Energieversorgungsvorrichtung nach einem der Ansprüche 1 bis 13 und/oder einem Bussystem nach Anspruch 14 oder 15.

18. Gebäude mit wenigstens einer Energieversorgungsvorrichtung nach einem der Ansprüche 1 bis 13 und/oder einem Bussystem nach Anspruch 14 oder 15.

19. Gebäude mit wenigstens einem Möbel nach Anspruch 16 oder mit wenigstens einer Gebäudeeinzichtung nach Anspruch 17.

20. Verwendung eines Bussystems nach Anspruch 14 oder 15 zur Anbindung einer Vielzahl von Energieverbrauchern (3), vorzugsweise eines Möbels oder einer Gebäudeeinrichtung, an eine Energieversorgungsvorrichtung (10) sowie zum Kontrollieren und Steuern der Leistungsabgabe an die Energieverbraucher (3).

## Claims

1. Energy supply device (10) for a plurality of energy consumers (3) to be connected therewith, wherein the energy supply device (10) has a predetermined maximum power output, wherein a monitoring device for the power output is provided, which prevents exceeding of the maximum output power of the energy supply device (10), wherein the energy supply device (10) is constructed for subsequent connection of further consumers.

2. Device according to claim 1, **characterised in that** the energy supply device is an electric current supply device (10).

3. Device according to one of the preceding claims, **characterised in that** the monitoring device is constructed for preventing switching on of a consumer if the maximum power output or a previously defined limit value for the power output would thereby be exceeded.

4. Device according to any one of the preceding claims, **characterised in that** a priority is assigned to the energy consumers (3) to be connected with the energy supply device (10), wherein the monitoring device is constructed for switching off at least one energy consumer with lower priority if through switching on a further energy consumer the maximum power output or a previously defined limit value for the power output is exceeded.

5. Device according to claim 3, **characterised in that** the monitoring device is constructed for switching-on of the at least one previously switched-off energy consumer after switching-off of the further energy consumer.

6. Device according to any one of the preceding claims, **characterised in that** a microcontroller control (7) is provided, which contains the monitoring device for checking and controlling the power output at the connected consumer (3).

7. Device according to claim 5, **characterised in that** the microcontroller control (7) is connected with all connected consumers (3) by way of a databus (5).

8. Device according to claim 6 or 7, **characterised in that** the microcontroller control (7) is constructed as a master unit and the connected consumer (3) as a slave unit of a master/slave arrangement.

9. Device according to any one of the preceding claims, **characterised in that** the monitoring device is constructed for switching off all connected consumers (3) if an overload of the energy supply device (10), for example as a consequence of a short-circuit, is detected.

10. Device according to any one of the preceding claims, **characterised in that** the monitoring device or the microcontroller control (7) is provided with an activatable and deactivatable energy-saving device by which the connected consumers (3) are shifted into a state of minimum energy consumption.

11. Device according to claim 10, **characterised in that** the monitoring device or the microcontroller control (7) is provided with a time-switching device by which the energy-saving device is activatable and deactivatable.

12. Device according to any one of the preceding claims, **characterised in that** the monitoring device or the microcontroller control (7) is provided with a temperature measuring device by which the energy delivery to the connected consumers is confined or switched off in the case of exceeding of an internal limit temperature.

13. Device according to any one of the preceding claims, **characterised in that** an interface for connection to an already-existing network, particularly a domestic appliance network, preferably with a CHAIN bus, is provided.

14. Bus system with at least one power bus (4) for connection of a plurality of energy consumers (3) to an energy supply device (10) according to any one of claims 1 to 13 and with at least one databus (5) serving for communication between a control device (7) and the connected energy consumers (3) in order to check and control the power supply of the energy supply device (10) to the energy consumers (3).

15. Bus system according to claim 14, **characterised in that** an interface for connection to an already-existing network, particularly a domestic appliance network, preferably with a CHAIN bus, is provided.

16. Item of furniture with an energy supply device according to any one of claims 1 to 13 and/or a bus system according to claim 14 or 15.

17. Building equipment with at least one energy supply device according to any one of claims 1 to 13 and/or a bus system according to claim 14 or 15.

18. Building with at least one energy supply device according to any one of claims 1 to 13 and/or a bus system according to claim 14 or 15.

19. Building with at least one item of furniture according to claim 16 or with at least one building equipment according to claim 17.

20. Use of a bus system according to claim 14 or 15 for connection of a plurality of energy consumers (3), preferably of an item of furniture or a building equipment, to an energy supply device (10) as well as for checking and controlling the power supply to the energy consumers (3).

## Revendications

1. Dispositif d'alimentation en énergie (10) pour une pluralité de récepteurs d'énergie (3) à connecter audit dispositif, le dispositif d'alimentation en énergie (10) présentant une émission de puissance maximale prédéterminée, un dispositif de surveillance de la puissance émise étant prévu, ledit dispositif empêchant un dépassement de la puissance émise maximale du dispositif d'alimentation en énergie (10), le dispositif d'alimentation en énergie (10) étant réalisé pour la connexion ultérieure de récepteurs supplémentaires.

2. Dispositif selon la revendication 1, **caractérisé en ce que** le dispositif d'alimentation en énergie est un dispositif d'alimentation en courant électrique (10).

3. Dispositif selon l'une quelconque des revendications précédentes, **caractérisé en ce que** le dispositif de surveillance est réalisé pour empêcher le raccordement d'un récepteur si celui-ci devait provoquer un dépassement de l'émission de puissance maximale et/ou d'une valeur limite préalablement définie pour l'émission de puissance.

4. Dispositif selon l'une quelconque des revendications précédentes, **caractérisé en ce qu'**une priorité est associée aux récepteurs d'énergie (3) à connecter au dispositif d'alimentation en énergie (10), le dispositif de surveillance étant conçu pour déconnecter au moins un récepteur d'énergie moins prioritaire lorsque l'émission de puissance maximale et/ou une valeur limite précédemment définie pour l'émission de puissance sont dépassées lors du raccordement d'un récepteur d'énergie supplémentaire.

5. Dispositif selon la revendication 3, **caractérisé en ce que** le dispositif de surveillance est conçu pour connecter l'au moins un récepteur d'énergie précédemment déconnecté après la déconnexion du récepteur d'énergie supplémentaire.

6. Dispositif selon l'une quelconque des revendications précédentes, **caractérisé en ce qu'**une commande de microcontrôleur (7) est prévue, laquelle contient le dispositif de surveillance servant au contrôle et à la commande de l'émission de puissance au niveau des récepteurs (3) connectés.

7. Dispositif selon la revendication 5, **caractérisé en ce que** la commande de microcontrôleur (7) est reliée à tous les récepteurs (3) connectés par le biais d'un bus de données (5).

8. Dispositif selon la revendication 6 ou 7, **caractérisé en ce que** la commande de microcontrôleur (7) prend la forme d'une unité maître et **en ce que** les récepteurs (3) connectés prennent la forme d'une unité esclave d'un agencement maître/esclave.

9. Dispositif selon l'une quelconque des revendications précédentes, **caractérisé en ce que** le dispositif de surveillance est conçu pour déconnecter tous les récepteurs (3) connectés en présence d'une surcharge du dispositif d'alimentation en énergie (10), par exemple à la suite d'un court-circuit.

10. Dispositif selon l'une quelconque des revendications précédentes, **caractérisé en ce que** le dispositif de surveillance et/ou la commande de microcontrôleur (7) sont pourvus d'un dispositif d'économie d'énergie pouvant être activé et désactivé et permettant de placer les récepteurs (3) connectés dans un état de consommation d'énergie minimale.

11. Dispositif selon la revendication 10, **caractérisé en ce que** le dispositif de surveillance et/ou la commande de microcontrôleur (7) sont pourvus d'un dispositif de minuterie permettant d'activer et de désactiver le dispositif d'économie d'énergie.

12. Dispositif selon l'une quelconque des revendications précédentes, **caractérisé en ce que** le dispositif de surveillance et/ou la commande de microcontrôleur (7) sont pourvus d'un dispositif de mesure de la température permettant de réduire et/ou de déconnecter l'émission d'énergie au niveau des récepteurs connectés en cas de dépassement d'une température interne limite.

13. Dispositif selon l'une quelconque des revendications précédentes, **caractérisé en ce qu'**une interface est prévue pour le raccordement à un réseau déjà existant, notamment un réseau d'appareils électroménagers, de façon préférée à l'aide d'un bus de type CHAIN.

14. Système de bus doté d'au moins un bus de puissance (4) servant à connecter une pluralité de récepteurs d'énergie (3) à un dispositif d'alimentation en énergie (10) selon l'une quelconque des revendications 1 à 13 et d'au moins un bus de données (5) servant à la communication entre un dispositif de commande (7) et les récepteurs d'énergie (3) connectés, pour contrôler et commander l'émission de puissance du dispositif d'alimentation en énergie (10) au niveau des récepteurs d'énergie (3).

15. Système de bus selon la revendication 14, **caractérisé en ce qu'**une interface est prévue pour le raccordement à un réseau déjà existant, notamment un réseau d'appareils électroménagers, de façon préférée à l'aide d'un bus de type CHAIN.

16. Meuble équipé d'un dispositif d'alimentation en énergie selon l'une quelconque des revendications 1 à 13 et/ou d'un système de bus selon la revendication 14 ou 15.

17. Installation de bâtiment équipée d'au moins un dispositif d'alimentation en énergie selon l'une quelconque des revendications 1 à 13 et/ou d'un système de bus selon la revendication 14 ou 15.

18. Bâtiment équipé d'au moins un dispositif d'alimentation en énergie selon l'une quelconque des revendications 1 à 13 et/ou d'un système de bus selon la revendication 14 ou 15.

19. Bâtiment équipé d'au moins un meuble selon la revendication 16 ou d'au moins une installation de bâtiment selon la revendication 17.

20. Utilisation d'un système de bus selon la revendication 14 ou 15 permettant de raccorder une pluralité de récepteurs d'énergie (3), de préférence d'un meuble ou d'une installation de bâtiment, à un dispositif d'alimentation en énergie (10) ainsi que de commander l'émission de puissance au niveau des récepteurs d'énergie (3).
